# EUROPÄISCHE PATENTSCHRIFT

(11) **EP 0 817 699 B1**
(45) Veröffentlichungstag und Bekanntmachung des Hinweises auf die Patenterteilung: **02.08.2000**
(21) Anmeldenummer: 96945496.6
(22) Anmeldetag: 12.10.1996
(51) Int. Cl.: B24B 1/04, B24B 39/02

(54) **VERFAHREN UND VORRICHTUNG ZUR HERSTELLUNG VON ROTATIONSSYMMETRISCHEN VENTILSITZFLÄCHEN MIT HOHER OBERFLÄCHENGÜTE AN VENTILEN**
PROCESS AND DEVICE FOR PRODUCING DYNAMICALLY BALANCED VALVE SEATS WITH A HIGH VALVE SURFACE QUALITY
PROCEDE ET DISPOSITIF DE PRODUCTION DE PORTEES DE SOUPAPES DE HAUTE QUALITE A SYMETRIE DE REVOLUTION

(30) Priorität: 20.01.1996 DE 19602068
(43) Veröffentlichungstag der Anmeldung: 14.01.1998
(73) Patentinhaber: ROBERT BOSCH GMBH, 70442 Stuttgart (DE)
(72) Erfinder: HEROLD, Stefan, D-96103 Hallstadt (DE); KIRSTEN, Oliver, D-95326 Kulmbach (DE)
(86) Internationale Anmeldenummer: DE9601949
(87) Internationale Veröffentlichungsnummer: WO9726112

(56) Entgegenhaltungen:
- DE-A- 2 907 256
- DE-A- 3 925 043
- DE-C- 812 767
- DE-C- 934 747
- FR-A- 2 555 489
- US-A- 2 232 843

## Beschreibung

### Stand der Technik

Die Erfindung geht aus von einem Verfahren nach der Gattung des Anspruchs 1 bzw. einer Vorrichtung nach der Gattung des Anspruchs 6. Es ist schon ein Verfahren und eine Vorrichtung zur Durchführung des Verfahrens bekannt (DE 39 25 043 C2), bei dem das bewegliche Ventilteil mit der Ventilsitzfläche des Ventilsitzkörpers in Berührung gebracht und in eine Rotationsbewegung versetzt wird, wobei eine parallel zur Drehachse wirkende Schwingungsbewegung mit hoher Frequenz auf den Ventilsitzkörper und das bewegliche Ventilteil übertragen wird. Dabei werden zwar Oberflächen mit sehr hoher Oberflächengüte erzeugt, die eine gute Dichtheit des Ventiles gewährleistet, jedoch ist dabei für die Montage des Ventiles nachteilig, daß die einzelnen Paarungen von beweglichem Ventilteil und Ventilsitzkörper, die nach dem bekannten Verfahren behandelt wurden, erhalten bleiben müssen, was den Montageablauf stört.

Bekannt ist aus der FR-A-2 555 489 eine Vorrichtung und ein Verfahren zum Schleifen und Polieren der Innenkontur von Ventilsitzkörpern mittels eines Kugelförmigen Werkzeugkörpers gemäß Oberbegriff des Ansprüche 1 bzw. 6.

### Vorteile der Erfindung

Das erfindungsgemäße Verfahren mit den Merkmalen des Anspruches 1 bzw. die erfindungsgemäße Vorrichtung mit den Merkmalen des Anspruches 6 haben demgegenüber den Vorteil, daß auf einfache Art und Weise eine Verbesserung der Oberflächengüte von rotationssymmetrischen Ventilsitzflächen erzeugt wird, so daß die Dichtheit des Ventiles im Zusammenspiel mit Dichtflächen an dem beweglichen Ventilteil wesentlich verbessert wird, ohne daß eine spanabtragende Bearbeitung erforderlich ist. Die elastische Verformung zwischen der Ventilsitzfläche und dem Werkzeugkörper aufgrund der Hertz'schen Pressung bewirkt eine relativ breite, geglättete Spur an der Ventilsitzfläche, in der die Oberflächenrauhigkeit vermindert ist, ohne eine nennenswerte Vertiefung in der Ventilsitzfläche des Ventilsitzkörpers. Während der Montage des Ventiles mit dem erfindungsgemäß behandelten Ventilsitzkörper muß im Gegensatz zu einem nach dem bekannten Verfahren behandelten Ventilsitzkörper keine vorbestimmte Paarung mit einem beweglichen Ventilteil beachtet werden.

Durch die in den Ansprüchen 2-5 und 7-11 aufgeführten Maßnahmen sind vorteilhafte Weiterbildungen und Verbesserungen des im Anspruch 1 angegebenen Verfahrens bzw. der im Anspruch 6 angegebenen Vorrichtung zur Durchführung des Verfahrens möglich.

Ein wesentliches Merkmal des Vorrichtung besteht darin, die Werkzeugkörperdrehachse, um die der Werkzeugkörper gedreht wird, gegenüber einer in Längsrichtung des Ventilsitzkörpers verlaufenden Ventilsitzkörperachse zu neigen, wodurch ein in einem Bereich der Berührungsfläche zwischen Ventilsitzkörper und Werkzeugkörper eingebrachtes Gleitmittel stets wieder neu an die Berührungfläche herangebracht wird und sich an der Berührungsfläche eine Schmierschicht aufbaut, die ein "Fressen" zwischen Ventilsitzkörper und Werkzeugkörper verhindert. Vorteilhaft ist es, die Ventilsitzkörpereinspanneinheit der Vorrichtung aus einem Aufnahmekörper und einem Niederhalterkörper auszubilden, wodurch ein einfaches Einsetzen, Fixieren und Entfernen des Ventilsitzkörpers möglich ist.

### Zeichnung

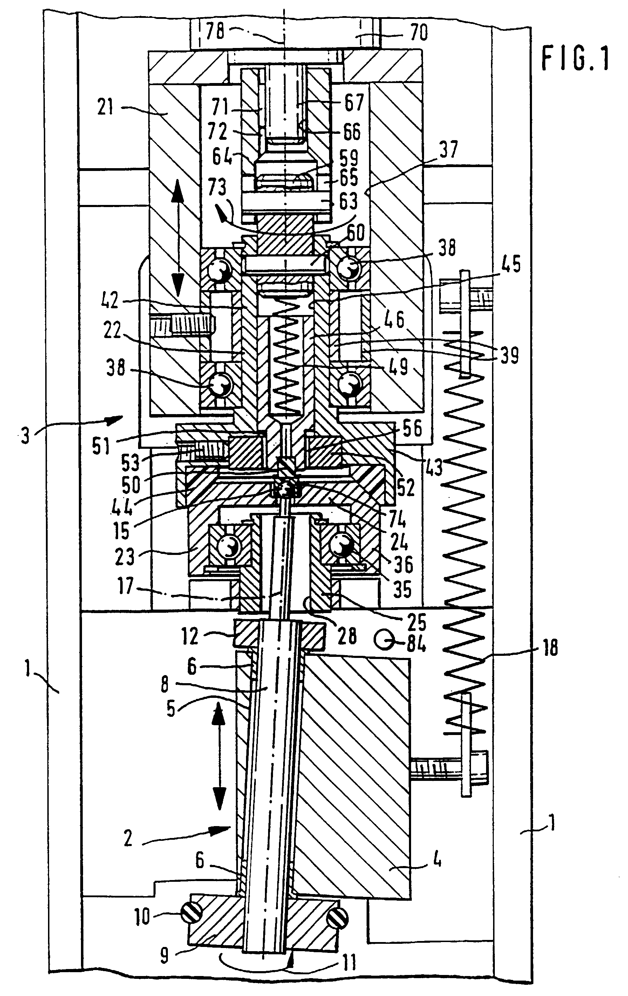

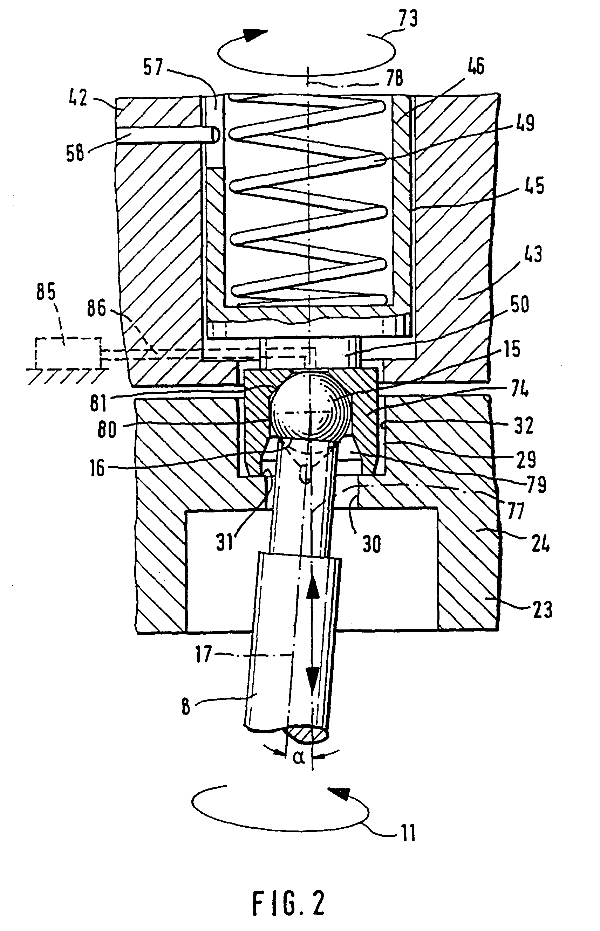

Ein Ausführungsbeispiel der Erfindung ist in der Zeichnung vereinfacht dargestellt und in der nachfolgenden Beschreibung näher erläutert. Es zeigen Figur 1 eine Vorrichtung zur Herstellung von rotationssymmetrischen Ventilsitzflächen an Ventilen, Figur 2 eine Teildarstellung der Vorrichtung nach Figur 1 in größerem Maßstab.

### Beschreibung des Auführungsbeispieles

In der Figur 1 ist eine Ausführungsform eines erfindungsgemäßen Vorrichtung zur Herstellung von rotationssymmetrischen Ventilsitzflächen mit hoher Oberflächengüte an Ventilen dargestellt, die einen Vorrichtungsrahmen 1 aufweist, an dem eine Werkzeughalteeinheit 2 und eine Ventilsitzkörpereinspanneinheit 3 gelagert sind. Werkzeughalteeinheit 2 und Ventilsitzkörpereinspanneinheit 3 sind axial in Richtung der Längsachse des Vorrichtungsrahmens 1 verschiebbar. Die Werkzeughalteeinheit 2 hat einen Lagerblock 4 mit einer gegenüber der Längsachse des Vorrichtungsrahmens 1 geneigt verlaufenden Lagerbohrung 5, in der Lagerbuchsen 6 angeordnet sind, die als Gleitlager für einen Werkzeugaufnahmekörper 8 dienen, der sich somit drehbar gelagert durch die Lagerbohrung 5 des Lagerblocks 4 hindurch erstreckt. Mit dem Werkzeugaufnahmekörper 8 ist eine Riemenscheibe 9 verbunden, an der ein Antriebsriemen 10 angreift und den Werkzeugaufnahmekörper 8 in Pfeilrichtung 11 verdreht. Anstelle des Riemenantriebes kann auch der Werkzeugaufnahmekörper 8 direkt oder über ein Getriebe durch einen Elektromotor angetrieben werden. Auf der der Riemenscheibe 9 abgewandten Seite des Lagerblocks 4 ist auf dem Werkzeugaufnahmekörper 8 eine Anschlagscheibe 12 befestigt. An dem der Riemenscheibe 9 abgewandten Ende des Werkzeugaufnahmekörpers 8 ist, wie auch die Figur 2 zeigt, ein kugelförmiger Werkzeugkörper 15 befestigt. Der Werkzeugkörper 15 wird vorzugsweise durch einen Kugelkörper gebildet, der an einer Endfläche 16 des Werkzeugaufnahmekörpers 8 anliegt und daran gehalten wird. Hierzu geht von der Endfläche 16 ein gestrichelt dargestellter Innenkegel 19 ins Innere des Werkzeugaufnahmekörpers 8 aus, der den Kugelkörper zentriert. Gehalten wird der Werkzeugkörper 15 am Werkzeugaufnahmekörper 8 z. B. durch Kleben, Löten oder ähnliches oder durch Erzeugung von Unterdruck im Innenkegel 19. Zusammen mit dem Werkzeugaufnahmekörper 8 ist der Werkzeugkörper 15 um eine Werkzeugkörperdrehachse 17, die auch die Längsachse des Werkzeugaufnahmekörpers 8 ist, verdrehbar. An dem Lagerblock 4 greift eine Zugfeder 18 mit ihrem einen Ende an, die mit ihrem anderen Ende an dem Vorrichtungsrahmen 1 befestigt ist und auf die Werkzeughalteeinheit 2 eine Kraft zur Verschiebung in Richtung zur Ventilsitzkörpereinspanneinheit 3 hin ausübt.

Die Ventilsitzkörpereinspanneinheit 3 weist einen Grundkörper 21, einen Niederhalterkörper 22 und einen Aufnahmekörper 23 auf. Der Aufnahmekörper 23 ist topfförmig ausgebildet und überragt radial mit einem Bodenteil 24 einen feststehend mit dem Vorrichtungsrahmen 1 verbundenen Lagerkörper 25. In Längsrichtung verlaufend weist der Lagerkörper 25 einen Durchgangskanal 28 auf, durch den sich das aus dem Lagerblock 4 herausragende Ende des Werkzeugaufnahmekörpers 8 derart erstreckt, daß der Werkzeugkörper 15 sich zumindest teilweise innerhalb einer gestuften Aufnahmeöffnung 29 im Bodenteil 24 des Aufnahmekörpers 23 befindet. Die Aufnahmeöffnung 29 durchdringt das Bodenteil 24 und hat dem Lagerkörper 25 zugewandt einen ersten Abschnitt 30, der an einer Aufnahmestufe 31 in einen zweiten Abschnitt 32 mit größerem Durchmesser übergeht. Auf den Lagerkörper 25 ist ein Wälzlager 35 aufgesetzt und auf das Wälzlager 35 der Aufnahmekörper 23 mit seinem Zylindermantel 36, so daß der Aufnahmekörper 23 am Vorrichtungsrahmen 1 drehbar um den Lagerkörper 25 gelagert ist. Auf der dem Lagerblock 4 abgewandten Seite des Aufnahmekörpers 23 ist der Grundkörper 21 axial beweglich am Vorrichtungsrahmen 1 gelagert.

In eine Lageröffnung 37 des Grundkörpers 21 sind zwei Wälzlager 38 mit einem axialen Abstand zueinander eingepreßt, wozu zwischen den Wälzlagern 38 Abstandshülsen 39 angeordnet sind. Die äußere Abstandshülse 39 wird durch wenigstens eine den Grundkörper 21 durchdringende Klemmschraube oder einen Stift fixiert. In die Wälzlager 38 ist ein Schaftkörper 42 des Niederhalterkörpers 22 eingepreßt, der damit teilweise in den Grundkörper 21 ragt. Der Niederhalterkörper 22 weist ebenfalls einen Kragenkörper 43 auf, der sich an das aus dem Grundkörper 21 herausragende Ende des Schaftkörpers 42 anschließt und dem Aufnahmekörper 23 zugewandt ist. An dem Kragenkörper 43 ist ein elastischer Ringkörper 44 angeordnet, mit dem der Kragenkörper 43 an den Aufnahmekörper 23 anlegbar ist und diesen bei einer Verdrehung des Niederhalterkörpers 22 durch Reibschluß in die gleiche Drehrichtung mitnimmt. In einer im Schaftkörper 42 und im Kragenkörper 43 des Niederhalterkörpers 22 vorgesehenen Gleitbohrung 45 ist ein Stößel 46 gleitbar gelagert, der durch eine Druckfeder 49 in Richtung zum Aufnahmekörper 23 hin beaufschlagt wird. Die Federkraft der Druckfeder 49 ist größer als die Federkraft der Zugfeder 18. An dem aus dem Kragenkörper 43 herausragenden Ende des Stößels 46 ist ein vorzugsweise elastisch ausgebildeter Andruckkörper 50 angeordnet. Bei dem in Figur 1 dargestellten Ausführungbeispiel der Vorrichtung ist das den Andruckkörper 50 aufnehmende Ende des Stößels 46 mit wenigstens zwei Flächen 51 am Umfang versehen und ragt in einen Mitnahmering 52, der mittels einer Schraube 53 innerhalb des Kragenkörpers 43 gehalten wird und eine Mitnahmeöffnung 56 hat, die mit den Flächen 51 korrespondierende Flächen aufweist, so daß bei einer Verdrehung des Niederhalterkörpers 22 der Stößel 46 durch den Mitnahmering 52 zu der gleichen Drehbewegung veranlaßt wird. Bei dem Ausführungsbeispiel nach Figur 2 ist statt einem Mitnahmering in der Wandung des Stößels 46 eine Mitnahmenut 57 ausgebildet, in die ein die Wandung des Schaftkörpers 42 durchdringender Mitnahmestift 58 ragt.

Dem Kragenkörper 43 abgewandt ragt in die Gleitbohrung 45 ein Übertragungsbolzen 59, an dem das dem Stößel 46 abgewandte Ende der Druckfeder 49 anliegt und der von einem ersten Querstift 60 durchdrungen wird, der auch die Wandung des Schaftkörpers 42 durchdringt, so daß der Übertragungsbolzen 59 und der Schaftkörper 42 fest miteinander gekoppelt sind. Das aus dem Schaftkörper 42 herausragende Ende des Übertragungsbolzens 59 wird von einem zweiten Querstift 63 durchdrungen und ragt in eine Kupplungshülse 64, die dem Übertragungsbolzen 59 zugewandt, gabelförmig ausgebildet ist und mit Längsnuten 65 über den aus dem Übertragungsbolzen 59 herausragenden zweiten Querstift 63 greift, so daß bei einer Verdrehung der Kupplungshülse 64 der Übertragungsbolzen 59 in der gleichen Drehrichtung mitgenommen wird. In eine Kupplungsöffnung 66 der Kupplungshülse 64 ragt eine Drehwelle 67 eines am Grundkörper 21 befestigten Elektromotors 70 und ist über eine Paßfeder 71, die in einer Federnut 72 der Kupplungsöffnung 66 und in die Drehwelle 67 ragt, drehfest verbunden, so daß der Elektromotor 70 über die Kupplungshülse 64 den Niederhalterkörper 22 in Pfeilrichtung 73 verdrehen kann, die der Drehrichtung des Werkzeugaufnahmekörpers 8 in Pfeilrichtung 11 entgegengesetzt ist.

In den Figuren 1 und 2 ist die Ventilsitzkörpereinspanneinheit 3 jeweils in einer Stellung dargestellt, in der ein Ventilsitzkörper 74 auf die Aufnahmestufe 31 der Aufnahmeöffnung 29 des Aufnahmekörpers 23 aufgesetzt ist und durch den Stößel 46 des Niederhalterkörpers 22 in dieser Stellung gehalten wird, in der eine in Längsrichtung verlaufende Ventilsitzkörperachse 77 fluchtend zu einer Längsachse 78 der Ventilsitzkörpereinspanneinheit 3 verläuft. Der Ventilsitzkörper 74 ist zwischen dem Stößel 46 und dem Aufnahmekörper 23 derart fest eingespannt, daß er bei einer Verdrehung des Niederhalterkörpers 22 in Pfeilrichtung 73 in gleicher Weise um die Ventilsitzkörperachse 77 koaxial zur Längsachse 78 verdreht wird. Erfindungsgemäß ist die Werkzeugkörperdrehachse 17 gegenüber der Ventilsitzkörperachse 77 um einen Winkel α geneigt, der etwa zwischen 2 und 10° liegt, insbesondere 3° beträgt. Der Ventilsitzkörper 74 weist eine koaxial zur Ventilsitzkörperachse 77 verlaufende und den Ventilsitzkörper 74 mit gestuften Abschnitten durchdringende Längsbohrung 79 auf, wobei sich an einen Führungsabschnitt 80 mit zur Ventilsitzkörperachse 77 parallelen Wänden der Aufnahmestufe 31 abgewandt ebenfalls als Abschnitt der Längsbohrung 79 eine Ventilsitzfläche 81 anschließt, die sich von der Aufnahmestufe 31 wegverlaufend konisch verjüngt. Der Ventilsitzkörper 74 findet beispielsweise Verwendung in bekannten Brennstoffeinspritzventilen von Brennstoffeinspritzanlagen für Brennkraftmaschinen, insbesondere gemischverdichtenden fremdgezündeten Brennkraftmaschinen. In die Längsbohrung 79 des Ventilsitzkörpers 74 ragt der Werkzeugaufnahmekörper mit dem Werkzeugkörper 15 hinein, wobei der kugelförmige Werkzeugkörper 15 mit einer durch die Zugfeder 18 erzeugten Anpreßkraft von etwa zwischen 5 bis 50 N, insbesondere etwa 20 N an die Ventilsitzfläche 81 gepreßt wird. Dabei berühren sich die Ventilsitzfläche 81 und der kugelförmige Werkzeugkörper 15 in einer Berührungsfläche, in der im montierten Zustand des Ventiles ein beweglicher Schließkörper, insbesondere ein kugelförmig ausgebildeter Schließkörper gleichen Durchmessers wie der Werkzeugkörper 15, dichtend anliegt. Der Ventilsitzkörper 74 ist aus Metall gefertigt, insbesondere aus einem legierten Stahl. Für den kugelförmigen Werkzeugkörper 15 wird ein Material gewählt, das wenigstens die gleiche Härte aufweist, wie der Ventilsitzkörper 74, z.B. Stahl, Keramik, Glas oder ähnliches. Zur Bearbeitung eines Ventilsitzkörpers 74 wird zunächst der Grundkörper 21 mit dem Niederhalterkörper 22 am Vorrichtungsrahmen 1 entlang der Längsachse 78 derart verschoben, daß er einen ausreichend großen Abstand zum Aufnahmekörper 23 hat, um es zu ermöglichen, den Ventilsitzkörper 74 in die Aufnahmeöffnung 29 derart einzusetzen, daß er mit der Ventilsitzfläche 81 am Werkzeugkörper 15 anliegt. Bei vom Aufnahmekörper 23 abgehobenem Niederhalterkörper 22 wird die Werkzeughalteeinheit 2 durch die Kraft der Zugfeder 18 so weit entlang des Vorrichtungsrahmens 1 in Richtung zum Aufnahmekörper 23 hin verschoben, bis der Lagerblock 4 an einem Anschlagbolzen 84 des Vorrichtungsrahmens 1 zum Anliegen kommt. In dieser Stellung ragt der Werkzeugkörper 15 weiter aus der Aufnahmeöffnung 29 heraus und erleichtert damit das Einfügen des Ventilsitzkörpers 74. Danach wird der Grundkörper 21 mit dem Niederhalterkörper 22 beispielsweise mittels eines Pneumatik- oder Hydraulikzylinders so lange zum Aufnahmekörper 23 hin verschoben, bis der Kragenkörper 43 mit dem Ringkörper 44 am Aufnahmekörper 23 anliegt und der Ventilsitzkörper 74 durch den Andruckkörper 50 fest an die Aufnahmestufe 31 gepreßt wird. Dabei wird die Werkzeughalteeinheit 2 mit dem Werkzeugkörper 15 entgegen der Kraft der Zugfeder 18 verschoben und hebt von dem Anschlagbolzen 84 ab. In dieser Stellung liegt der Werkzeugkörper 15 mit einer durch die Zugfeder 18 erzeugten Anpreßkraft von beispielsweise 20 N an der Ventilsitzfläche 81 an. Um ein "Fressen" zwischen dem Werkzeugkörper 15 und der Ventilsitzfläche 81 zu vermeiden, ist es zweckmäßig, in den Bereich der Berührungsfläche zwischen Werkzeugkörper 15 und Ventilsitzfläche 81 ein Gleitmittel zuzugeben, beispielsweise ein Öl in Form eines Schleiföles. Das Gleitmittel kann von einer Gleitmittelversorgungseinrichtung 85 über eine bewegliche Gleitmittelleitung 86 in den Bereich der Berührungsfläche zwischen Ventilsitzkörper 81 und Werkzeugkörper 15 vor dem Aufsetzen des Ventilsitzkörpers 74, nach dem Aufsetzen des Ventilsitzkörpers 74 auf den Werkzeugkörper 15 oder während des Bearbeitungsvorganges zugegeben werden. In einer anderen Ausgestaltung wird die Ventilsitzfläche 81 vor dem Aufsetzen des Ventilsitzkörpers 74 auf den Werkzeugkörper 15 mit Gleitmittel benetzt. Bei eingesetztem Ventilsitzkörper 74 und geschlossener Vorrichtung wird nun der Werkzeugkörper 15 in Pfeilrichtung 11 verdreht und der Ventilsitzkörper 74 in entgegengesetzter Drehrichtung in Pfeilrichtung 73. Dabei dreht sich der Ventilsitzkörper 74 etwa mit 2000 bis 5000 U/min, insbesondere etwa mit 4000 U/min, und der Werkzeugkörper 15 etwa mit 300 bis 1000 U/min, insbesondere mit etwa 500 U/min, und die Bearbeitungszeit beträgt ca. 30 sec. Zur Durchführung des Verfahrens ist es nicht zwingend notwendig, daß sich Werkzeugkörper 15 und Ventilsitzkörper 74 in entgegengesetzten Richtungen drehen, vielmehr kann auch einer der Körper 15, 74 stillstehen oder beide Körper 15, 74 drehen sich in gleicher Richtung mit unterschiedlichen Drehzahlen. Die Anpressung des Werkzeugkörpers 15 an die Ventilsitzfläche 81 führt zu einer elastischen Verformung der Ventilsitzfläche 81 im Bereich der Berührungsfläche aufgrund der Hertz'schen Pressung, wodurch eine relativ breite Glättspur ohne eine nennenswerte Vertiefung in der Ventilsitzfläche erreicht wird, die beim späteren Zusammenfügen mit einem Ventilschließkörper ein dichtes Schließen des Ventiles gewährleistet. Die Neigung der Werkzeugkörperdrehachse 17 gegenüber der Ventilsitzkörperachse 77 um den Winkel α führt dazu, daß ständig Gleitmittel frisch in den Bereich der Berührungsfläche zwischen Ventilsitzfläche 81 und Werkzeugkörper 15 befördert wird und sich damit stets ein Film des Gleitmittels in der Berührungsfläche aufbaut, der ein "Fressen" verhindert.

## Patentansprüche

1. Verfahren zur Herstellung von rotationssymmetrischen Ventilsitzflächen mit hoher Oberflächengüte an Ventilen, insbesondere Brennstoffeinspritzventilen für Brennkraftmaschinen, mit wenigstens einer an einem Ventilsitzkörper ausgebildeten, geneigten Ventilsitzfläche, wobei die Ventilsitzfläche des Ventilsitzkörpers mit einem Kugelförmig ausgebildeten Werkzeugkörper in Berührung gebracht wird und Ventilsitzkörper sowie Werkzeugkörper relativ zueinander in eine Rotationsbewegung versetzt und in Richtung aufeinander zu mit einer Anpreßkraft beaufschlagt werden, dadurch gekennzeichnet, daß der Werkzeugkörper (15) mit einer derartigen Anpreßkraft (18) an der Ventilsitzfläche (81) des Ventilsitzkörpers (74) zur Anlage gebracht wird, daß sich Ventilsitzfläche (74) und Werkzeugkörper (15) in ihrer Berührungsfläche nur elastisch verformen.

2. Verfahren nach Anspruch 1, dadurch gekennzeichnet, daß der Ventilsitzkörper (74) um eine Ventilsitzkörperachse (77) und der Werkzeugkörper (15) um eine Werkzeugkörperdrehachse (17) gedreht werden und Ventilsitzkörperachse (77) und Werkzeugkörperdrehachse (17) gegeneinander geneigt sind.

3. Verfahren nach Anspruch 1 oder 2, dadurch gekennzeichnet, daß die Anpreßkraft (18) über den Werkzeugkörper (15) aufgebracht wird.

4. Verfahren nach einem der vorhergehenden Ansprüche, dadurch gekennzeichnet, daß Ventilsitzkörper (74) und Werkzeugkörper (15) in entgegengesetzten Richtungen gedreht werden.

5. Verfahren nach einem der vorhergehenden Ansprüche, dadurch gekennzeichnet, daß in einen Bereich der Berührungsfläche zwischen Ventilsitzfläche (81) und Werkzeugkörper (15) ein Gleitmittel eingebracht wird.

6. Vorrichtung zur Herstellung von rotationssymmetrischen Ventilsitzflächen mit hoher Oberflächengüte an Ventilen, insbesondere Brennstoffeinspritzventilen für Brennkraftmaschinen, die wenigstens eine an einem Ventilsitzk er ausgebildete, geneigte Ventilsitzfläche haben, mit einem kugelförmig ausgebildeten Werkzeugkörper, der an einem Werkzeugaufnahmekörper einer Werkzeughalteeinheit gehalten und mit diesem um eine Werkzeugkörperdrehachse verdrehbar ist, und mit einer Ventilsitzkörpereinspanneinheit sowie einer den Ventilsitzkörper und den Werkzeugkörper aufeinander zu beaufschlagenden Anpreßkraft zur Durchführung des Verfahrens nach einem der Ansprüche 1-5, dadurch gekennzeichnet, daß die Anpreßkraft (18) so groß ist, daß sich Ventilsitzfläche (81) und Werkzeugkörper (15) an ihrer Berührungsfläche nur elastisch verformen und der Ventilsitzkörper (74) in Längsrichtung verlaufend eine Ventilsitzkörperachse (77) hat und die Ventilsitzkörperachse (77) und die Werkzeugkörperdrehachse (17) gegeneinander geneigt sind.

7. Vorrichtung nach Anspruch 6, dadurch gekennzeichnet, daß die Anpreßkraft über den Werkzeugkörper (15) mittels Federkraft (18) aufgebracht wird.

8. Vorrichtung nach Anspruch 6, dadurch gekennzeichnet, daß Ventilsitzkörper (74) und Werkzeugkörper (15) in entgegengesetzten Richtungen gedreht werden.

9. Vorrichtung nach Anspruch 6 oder 7, dadurch gekennzeichnet, daß in einem Bereich der Berührungsfläche zwischen Ventilsitzfläche (81) und Werkzeugkörper (15) ein Gleitmittel zugegeben wird.

10. Vorrichtung nach Anspruch 6, dadurch gekennzeichnet, daß die Ventilsitzkörpereinspanneinheit (3) einen drehbar gelagerten Aufnahmekörper (23) und einen drehbar gelagerten Niederhalterkörper (22) aufweist.

11. Vorrichtung nach Anspruch 10, dadurch gekennzeichnet, daß der Niederhalterkörper (22) axial verschiebbar gelagert ist.

## Claims

1. Method for the production of rotationally symmetrical valve seat surfaces with a high-quality surface finish on valves, in particular fuel injection valves for internal combustion engines, with at least one sloping valve seat surface formed on one valve seat body, the valve seat surface of the valve seat body being brought into contact with a tool body of spherical design, and the valve seat body and tool body being rotated relative to one another and subjected to a contact force towards one another, characterized in that the tool body (15) is brought into contact with the valve seat surface (81) of the valve seat body (74) with a contact force (18) such that the valve seat surface (74) and the tool body (15) are deformed only elastically in their area of contact.

2. Method according to Claim 1, characterized in that the valve seat body (74) is rotated about a valve-seat body axis (77) and the tool body (15) is rotated about a tool-body axis of rotation (17) and the valve-seat body axis (77) and the tool-body axis of rotation (17) are inclined relative to one another.

3. Method according to Claim 1 or 2, characterized in that the contact force (18) is applied via the tool body (15).

4. Method according to one of the preceding claims, characterized in that the valve seat body (74) and the tool body (15) are rotated in opposite directions.

5. Method according to one of the preceding claims, characterized in that a lubricant is introduced into a region of the area of contact between the valve seat surface (81) and the tool body (15).

6. Apparatus for the production of rotationally symmetrical valve seat surfaces with a high-quality surface finish on valves, in particular fuel injection valves for internal combustion engines, which have at least one sloping valve seat surface formed on a valve seat body, with a tool body of spherical design which is held on a tool-receiving body of a tool-holding unit and can be rotated with this body about a tool-body axis of rotation, and with a valve-seat-body clamping unit and a contact force which presses the valve seat body and the tool body towards one another, for the purpose of carrying out the method according to one of Claims 1-5, characterized in that the magnitude of the contact force (18) is such that the valve seat surface (81) and the tool body (15) are deformed only elastically at their contact surface and, in the longitudinal direction, the valve seat body (74) has a valve-seat body axis (77) and the valve-seat body axis (77) and the tool-body axis of rotation (17) are inclined relative to one another.

7. Apparatus according to Claim 6, characterized in that the contact force is applied via the tool body (15) by means of spring force (18).

8. Apparatus according to Claim 6, characterized in that the valve seat body (74) and the tool body (15) are rotated in opposite directions.

9. Apparatus according to Claim 6 or 7, characterized in that a lubricant is introduced into a region of the area of contact between the valve seat surface (81) and the tool body (15).

10. Apparatus according to Claim 6, characterized in that the valve-seat-body clamping unit (3) has a rotatably mounted receiving body (23) and a rotatably mounted hold-down body (22).

11. Apparatus according to Claim 10, characterized in that the hold-down body (22) is mounted in such a way that it can be displaced axially.

## Revendications

1. Procédé de réalisation de portées symétriques en rotation ayant une qualité de surface élevée sur des soupapes, notamment des injecteurs de carburant pour des moteurs à combustion interne, comprenant au moins une portée inclinée, réalisée dans un organe formant siège de soupape, la portée de l'organe formant siège de soupape étant mise en contact avec un outil de forme sphérique, et l'organe formant siège de soupape et l'outil sont mis en rotation relative et pressés l'un contre l'autre,
caractérisé en ce que
l'outil (15) est appliqué contre la portée (81) de l'organe formant siège de soupape (74) avec une force (18) telle que la portée (81) et l'outil (15) ne se déforment que dans le domaine élastique au niveau de leur surface de contact.

2. Procédé selon la revendication 1,
caractérisé en ce que
l'organe formant siège de soupape (74) est tourné autour de son axe (77) et l'outil (15) autour de son axe (17), l'axe (77) de l'organe formant siège de soupape et l'axe (17) de l'outil étant incliné.

3. Procédé selon les revendications 1 ou 2,
caractérisé en ce que
la force d'application (18) est exercée par l'intermédiaire de l'outil (15).

4. Procédé selon l'une quelconque des revendications précédentes,
caractérisé en ce que
l'organe formant siège de soupape (74) et l'outil (15) tournent dans des directions opposées.

5. Procédé selon l'une quelconque des revendications précédentes,
caractérisé en ce que
dans une zone de la surface de contact, entre la portée (81) et l'outil (15), on introduit un agent lubrifiant.

6. Dispositif pour réaliser des portées symétriques en rotation ayant une qualité de surface élevée sur des soupapes notamment des injecteurs de carburant pour des moteurs à combustion interne, ayant au moins une portée inclinée réalisée dans un organe formant siège de soupape, un outil de forme sphérique porté par un organe de réception d'outil d'une unité porte-outil, qui tourne avec celui-ci autour de l'axe de l'outil, et une unité de serrage de l'organe formant siège de soupape, ainsi qu'une force d'application agissant sur l'organe formant siège de soupape et sur l'outil pour la mise en oeuvre du procédé selon l'une des revendications 1 à 5,
caractérisé en ce que
la force de serrage (18) est d'une intensité telle que la portée (81) et l'outil (15) se déforment seulement élastiquement au niveau de leur surface de contact, et l'organe formant siège de soupape (74) a un axe (77) dirigé dans la direction longitudinale et incliné par rapport à l'axe de rotation (17) de l'outil.

7. Dispositif selon la revendication 6,
caractérisé en ce que
la force de serrage est appliquée par un ressort (18) par l'intermédiaire de l'outil (15).

8. Dispositif selon la revendication 6,
caractérisé en ce que
l'organe formant siège de soupape (74) et l'outil (15) sont entraînés en rotation dans des directions opposées.

9. Dispositif selon l'une des revendications 6 ou 7,
caractérisé en ce qu'
on ajoute un agent lubrifiant dans une zone de la surface de contact, entre la portée (81) et l'outil (15).

10. Dispositif selon la revendication 6,
caractérisé en ce que
l'unité de serrage (3) de l'organe formant siège de soupape comprend un organe de réception (23) monté à rotation et un organe d'enfoncement (22) monté à rotation.

11. Dispositif selon la revendication 10,
caractérisé en ce que
l'organe d'enfoncement (22) est monté coulissant axialement.
